# EUROPÄISCHE PATENTSCHRIFT

(11) **EP 2 239 076 B1**
(45) Veröffentlichungstag und Bekanntmachung des Hinweises auf die Patenterteilung: **25.01.2012**
(21) Anmeldenummer: 10156493.8
(22) Anmeldetag: 15.03.2010
(51) Int. Cl.: B23B 51/04

(54) **Führungsleiste für Tiefbohrwerkzeuge und Bohrkopf**
Guide pad for deep drilling tools and drill head
Baguette de guidage pour outils à forer des trous profonds et tête de forage

(30) Priorität: 15.03.2009 DE 102009013270
(43) Veröffentlichungstag der Anmeldung: 13.10.2010
(73) Patentinhaber: Hermann von Rautenkranz Internationale Tiefbohr GmbH & Co. KG-ITAG, 29221 Celle (DE)
(72) Erfinder: Kruse, Bernd, 31228 Peine (DE)
(74) Vertreter: Scholz, Hartmut

(56) Entgegenhaltungen:
- EP-A1- 1 419 839
- JP-A- 2003 211 311
- JP-A- 2008 254 089

## Beschreibung

Die vorliegende Erfindung betrifft eine Führungsleiste zur Aufnahme der entstehenden Flächenpressung an mit Schneidwerkzeugen versehenen, an Bohrgestängen geführten Bohrköpfen, mit denen tiefe Bohrlöcher in entsprechende Werkstücke einbringbar sind, die sich mit Verschleißbereiche aufweisenden Oberflächen an den Bohrungsoberflächen der entstehenden Bohrlöcher abstützen. Außerdem betrifft die Erfindung einen Bohrkopf mit derartigen Führungsleisten . Eine solde Führungsleisten und ein solder Bohrkopf sind aus der EP2090390 A1 bekannt.

Aus der DE 100 24 638 ist beispielsweise ein Tiefbohrverfahren mit einer asymmetrischen Schneidanordnung bekannt, bei dem die Führung des Schneidwerkzeugs durch eine Mehrpunktanlage in der Bohrung erfolgt. Dabei stützt sich das Schneidwerkzeug mit mindestens zwei Führungsleisten und einer vorzugsweise ohne Freiwinkel geschliffenen Nebertschneide in der von ihm selbst geschaffenen Bohrung ab.

Zusätzlich zu der Führungsfunktion bewirkt diese kontinuierliche Abstützung durch die Führungsleisten eine zusätzliche Glättung und damit Verbessetragung von Zerspanungskräften über die Führungsleisten in der Schnittebene auf das Werkstück.

Diese Führungsleisten werden bei kleineren Werkzeugen in den Bohrkopf eingelötet. Bei größeren Werkzeugen sind auswechselbare Führungsleisten vorgesehen. Dabei werden die Führungsleisten an den Gehäuseträger des Bohrkopfes mit als Schrauben ausgebildeten Verbindungsmitteln arretiert.

Aus der EP 2 090 390 A1 ist eine Führungsleiste bekannt, deren sich an der Bohrungsoberfläche des entstehenden Bohrloches abstützende Oberfläche durch eine quer verlaufende Vertiefung in zwei hintereinander liegende Verschleißbereiche unterteilt ist. Die Vertiefung soll der versenkten Aufnahme von als Schrauben ausgebildeten Verbindungsmitteln dienen, um die Führungsleiste leicht austauschbar an dem Bohrkopf befestigen und lösen zu können. Nachteilig dabei ist, dass der zur Verfügung stehende Verschleißbereich der Oberfläche durch die Fläche der Vertiefung verringert wird. Der Verschleiß wird dadurch erhöht und die Standzeit einer solchen Führungsleiste verringert sich.

Aus der DE 700 269 A ist es bekannt, die Führungsleisten drehbar in einer Führungsbuchse zu lagern. Damit dreht sich lediglich der Bohrkopf um die Längsachse, während die Führungsleisten im Wesentlichen koaxial in Vortriebsrichtung des Bohrkopfes verfahrbar ausgebildet sind.

Aus der WO 88/10355 A1 ist weiter eine Vorrichtung zum Führen eines Bohrwerkzeuges zur Herstellung von Bohrungen bekannt. Dabei sind die Führungsleisten radial in schlitzartigen Ausnehmungen bewegbar.

In der DE 1 225 575 A1 ist ein Bohrkopf beschrieben, bei dem der Messereinsatz verschiebbar mit einem Bohrkopfschaft verbunden ist und die beim Schneiden auftretenden Radialkräfte über Stützleisten im Bohrloch abstützt.

Aus der DE 25 41 423 ist letztendlich ein Tiefbohrwerkzeug bekannt, bei dem die Führungsleisten federnd gelagert angeordnet sind.

Die bekannten auswechselbaren Führungsleisten haben sich zwar bewährt, ihre Standzeiten sind durch den relativ hohen Verschleiß aber relativ gering. Insbesondere bei größeren Bohrtiefen ist dies nachteilig, da für den Austausch der Führungsleisten das gesamte Bohrgestänge mit Bohrkopf aus dem Werkstück herausgezogen werden muss. Diese Arbeit ist zeit- und damit kostenintensiv, und zu den Arbeitskosten kommen die eigentlichen Werkzeugkosten und erhebliche Kosten für Stillstandzeiten hinzu, während denen die Bohrmaschine nicht produzieren kann.

Es ist daher Aufgabe der vorliegenden Erfindung, Führungsleisten zu schaffen, mit denen die Werkzeugkosten durch längere Standzeiten gesenkt und die Produktivität beim Tiefbohren erhöht werden kann.

Diese Aufgabe wird durch die im Anspruch 1 angegebenen Merkmale gelöst, insbesondere dadurch, dass die Oberfläche einer Führungsleiste mit mindestens einer sich in Längsrichtung erstreckenden konkaven Längsnut versehen ist, wobei sich beiderseits der Längsnut erstreckende Verschleißbereiche vorgesehen sind.

Durch diese Maβnahme wird die absolute Flächen-pressung auf mehrere Verschleiβbereiche aufgeteilt.

Die spezifische Flächenpressung auf die in verschleißendem Kontakt mit der gerade geschaffenen Bohrungsoberfläche stehenden Oberflächen der Führungsleisten wird dadurch verringert. Der Verschleiß an den kontaktierten Oberflächen der Führungsleisten wird verringert und ihre Standzeiten werden wesentlich verlängert.

Das Einbringen von Tiefbohrungen, bei denen aus massivem Stangenmaterial relativ dickwandige Rohre gebohrt werden, geschieht in mehr oder weniger langen Bohrschritten. Diese Bohrschritte sind in der Regel notwendig, um verschlissene Werkzeugkomponenten, beispielsweise die Führungsleisten, auszutauschen und die Werkstück bezogenen Bohrlochparameter zu überprüfen. Derartige Bohrlochparameter sind beispielsweise durch Verschleiß der Führungsleisten bedingte Maßabweichungen.

Bei diesen einzelnen Bohrschritten muss das gesamte Bohrgestänge mitsamt dem Bohrkopf aus dem Werkstück gezogen werden. Nach der Überprüfung und dem Austausch der Verschleißteile muss das Bohrgestänge wieder in die Bohrung eingefahren werden, um mit dem nächsten Bohrschritt fortfahren zu können.

Während des ziehens des Bohrgestänges und des Austausches der Verschleißteile ruht die Produktion der Tiefbohrmaschine. Durch die erfindungsgemäße Ausgestaltung der Führungsleisten können die Bohrschritte wesentlich verlängert und die Stillstandzeit der Tiefbohrmaschine verringert werden. Die Kosten können merklich gesenkt und die Produktivität einer solchen relativ teuren Tiefbohrmaschine kann deutlich erhöht werden.

Vorteilhafte Ausführungsformen der Erfindung sind Gegenstand der Unteransprüche.

Eine weitere Aufgabe der Erfindung ist es, einen Bohrkopf mit solchen vorteilhaften Führungsleisten zu schaffen.

Diese Aufgabe wird durch die im Anspruch 8 angegebenen Merkmale gelöst, insbesondere durch einen Bohrkopf, der mit Führungsleisten zur Aufnahme der durch Schneidwerkzeuge entstehenden Flächenpressung versehenen, an einem Bohrgestänge geführten in lange Bohrlöcher in entsprechende Werkstücke einbringbar ist, und die Führungsleisten sich mit Verschleißbereiche aufweisenden Oberflächen an der Bohrungsoberfläche der entstehenden Bohrlöcher abstützen, wobei die Führungsleisten die Merkmale gemäß dem Ansprüche 1 und den übrigen Unteransprüchen aufweisen.

Bei den erfindungsgemäßen Führungsleisten ist die Oberfläche mit einer sich in Längsrichtung erstreckenden Längsnut versehen, wobei sich die Verschleißbereiche beiderseits der Längsnut erstrecken. Dadurch entstehen an jeder Führungsleiste mindestens zwei von einander getrennte Verschleißbereiche, auf die sich die durch den Schneiddruck des Schneidwerkzeugs entstehenden Reaktionskräfte verteilen und abstützen können. Vorzugsweise sind auf dem Kreisumfang des Bohrkopfes dem Schneidwerkzeug etwa gegen überliegend Führungsleisten im Abstand von ca. 90° bis 120° vorgesehen, mit denen die Reaktionskräfte des Schneidwerkzeugs sich in einer Dreipunktanlage befinden und auf mindestens vier Verschleißbereiche verteilt werden können. Der spezifische Verschleiß wird dadurch deutlich verringert und die Standzeiten erhöht.

Bei einer vorteilhaften Ausgestaltung ist es vorgesehen, dass die Oberfläche beiderseits der sich in Längsrichtung erstreckenden Längsnut in Querrichtung eine doppelte Radiengeometrie aufweist. Beiderseits der Längsnut bilden sie dadurch Verschleißbereiche aus.

In einer bevorzugten Ausführungsform der erfindungsgemäßen Führungsleisten ist die Längsnut konkav ausgebildet und beiderseits an die doppelten Radiengeometrien angefast. Dadurch werden Spannungsspitzen vermieden und es entstehen gleichmäßige, allmähliche Übergänge. Dabei sind auch mehrere nebeneinander verlaufende Längsnuten möglich, so dass sich die Anzahl der Verschleißbereiche erhöht.

In einer weiteren Ausführungsform der Erfindung bilden die Führungsleisten gegenüber dem Bohrkopf einen Ringraum, der sich radial außen über die gesamte Länge des Bohrgestänges fortsetzt. Durch diesen Ringraum und die Längsnuten zwischen den Radiengeometrien können Kühlschmierstoffe zu den Schneidwerkzeugen des Bohrkopfes geleitet werden. zugleich können diese Kühlschmierstoffe, die unter relativ hohem Druck von ca. 5 bis 50 bar und darüber stehen können, die entstehenden Bohrspäne durch ein Spänemaul des Bohrkopfes in das hohle Bohrgestänge ausspülen und aus der entstehenden Bohrung austragen.

In einer weiteren Ausführungsform der Erfindung ist es vorgesehen, dass die quer zu den doppelten Radiengeometrie verlaufenen seitlichen Kantenbereiche zwischen der Oberfläche und der Unterseite mit Abrundungen oder prismenförmigen Abschrägungen versehen sind. Durch diese Maßnahmen werden die auf die Verschleißbereiche wirkenden Flächenpressungen optimal auf die Führungsleistenlagerungen der Bohrkopfes übertragen und gleichmäßiger verteilt.

In einer weiteren Ausführungsform der Erfindung können die längs zu den doppelten Radiengeometrie verlaufenen beidendigen Kopfbereiche der Führungsleisten zwischen der Oberfläche und der Unterseite in Arbeitsrichtung des Bohrkopfes mit Längsabrundungen versehen sein. Ebenso können die quer zu den doppelten Radiengeometrie verlaufenen seitlichen Kantenbereiche zwischen der Oberfläche und der Unterseite mit prismenförmigen Abschrägungen oder Abrundungen versehen sein. Die Führungsleistenlagerungen an dem Bohrkopf sind entsprechend prismenförmig oder abgerundet ausgebildet. Dadurch entsteht eine quasi schwimmende Lagerung der Führungsleisten an dem Bohrkopf, durch die die einwirkenden Schneiddrücke optimal verteilt werden können.

Ebenso wie während des Schneidbetriebs können beim Ein- und Ausfahren der Bohrköpfe an den Führungsleisten Verschleißspitzen auftreten. Zur Verringerung dieser Verschleißspitzen ist in einer weiteren Ausführungsform der Erfindung vorgesehen, dass die Verschleißbereiche gegenüber den beidendigen Kopfbereichen mit oberen Anfasungen, die seitlichen Kantenbereiche gegenüber den beidendigen Kopfbereichen mit seitlichen Anfasungen und die seitlichen Kantenbereiche und die beidendigen Kopfbereiche gegenüber der Unterseite mit unteren Anfasungen versehen sind.

Die Erfindung wird im Folgenden anhand von beispielhaften Ausführungsformen unter Bezugnahme auf die beigefügten Zeichnungen näher erläutert; es zeigen:
- **Figur 1**: den Längsschnitt durch einen her- kömmlichen Bohrkopf, mit Führungs- leiste zur Abstützung an der ent- stehenden Bohrungsoberfläche eines Werkstücks;
- **Figur 2**: die Vorderansicht eines Bohrkopfes nach Figur 1, mit Dreipunktanlage in einer entstehenden Bohrung und einem Spänemaul zum Austragen der entstehenden Bohrspäne;
- **Figur 3**: die isometrische Darstellung einer erfindungsgemäßen Führungsleiste, mit einer Oberfläche mit zwei Ver- schleißbereichen zur Abstützung der Reaktionskräfte des Schneidwerk- zeugs, die durch eine konkave, an zugeordnete Radiengeometrien ange- faste Längsnut gegeneinander abge- grenzt sind;
- **Figur 4**: den Querschnitt durch eine erfin- dungsgemäße Führungsleiste entlang der Schnittlinie IV - IV in der Fi- gur 3, mit einer Oberfläche mit mehreren, von einander getrennten Verschleißbereichen zur Abstützung der Reaktionskräfte des Schneid- werkzeugs und prismenförmigen Ab- schrägungen an der Unterseite zur verteilten Einleitung der Reakti- onskräfte in den Bohrkopf;
- **Figur 4a**: die schematische Darstellung einer erfindungsgemäßen Führungsleiste nach Figur 4, mit zwei Längsnuten zur Bildung mehrerer Radiengeomet- rien zur Aufnahme und kleinteilige- rer Verteilung der Reaktionskräfte des Schneidwerkzeugs;
- **Figur 5**: den Längsschnitt durch eine erfin- dungsgemäße Führungsleiste entlang der Schnittlinie V - V in Figur 3;
- **Figur 6**: den Querschnitt durch eine erfin- dungsgemäße Führungsleiste nach der Figur 3, mit einer abgerundeten Un- terseite zur quasi schwimmenden La- gerung in den Führungsleistenlage- rungen des Bohrkopfes, zur gleich- mäßig verteilten Einleitung der Re- aktionskräfte in Abhängigkeit von ihrer Entstehungsrichtung und Grö- β e;
- **Figur 7**: den Längsschnitt durch eine erfin- dungsgemäße Führungsleiste nach der Figur 3, mit einer abgerundeten Un- terseite in Längsrichtung, zur qua- si schwimmenden Lagerung in den Führungsleistenlagerungen des Bohr- kopfes, zur gleichmäßig verteilten Einleitung der Reaktionskräfte in Abhängigkeit von ihrer Entstehungs- richtung und Größe.

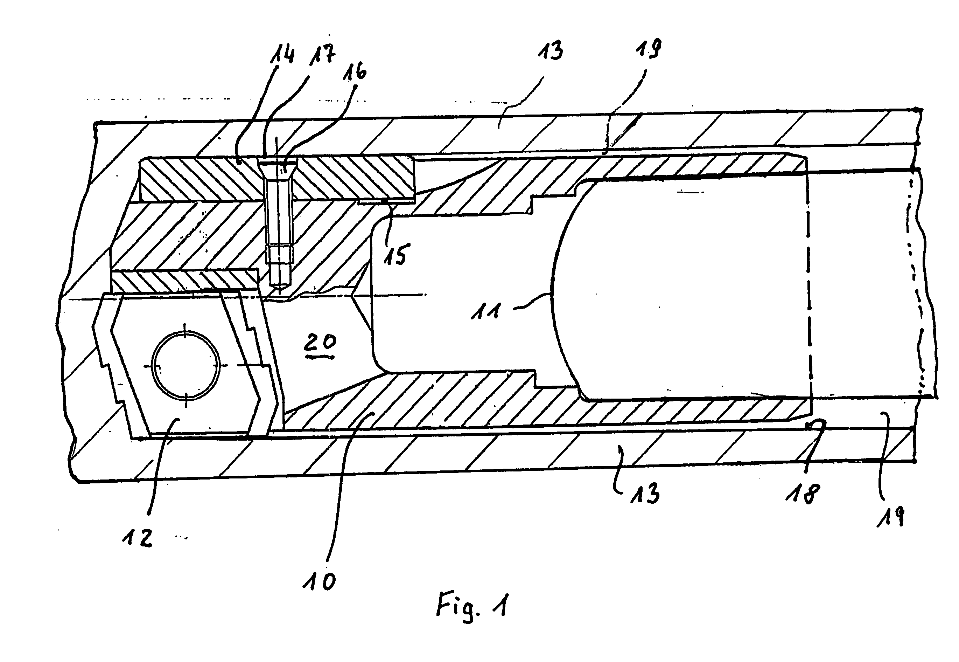

In Figur 1 ist ein Bohrkopf 10 schematisch dargestellt, der an einem Bohrgestänge 11 geführt ist und mittels eines Schneidwerkzeugs 12 eine tiefe Bohrung in ein Werkstück 13 treibt. Der Bohrkopf 10 stützt sich auf der dem Schneidwerkzeug 12 gegenüber liegenden Seite mit Führungsleisten 14 ab, von denen hier nur eine dargestellt ist.

Die Führungsleisten 14 sind im Wesentlich rechteckig ausgebildet. Sie ruhen in dem Bohrkopf 10 in Führungsleistenlagerungen 15 und sind mit Führungsleistenhalterungen 16 in den Führungsleistenlagerungen 15 gehalten. Die Führungsleistenhalterungen 16 können beispielsweise eingesenkte Schrauben sein, die durch Führungsleistenbohrungen 17 mit den Führungsleistenhalterungen 16 verbunden sind.

Die Führungsleisten 14 stützen den Bohrkopf 10 an der gerade entstandenen Bohrungsoberfläche 18 ab, die dabei zugleich geglättet wird. Da die Führungsleisten 14 über den Bohrkopf 10 radial überstehen, entsteht gegenüber der Bohrungsoberfläche 18 und dem Bohrgestänge 11 radial außen ein Ringraum 19, durch den von außen Kühlschmierstoffe unter relativ hohem Druck von ca. 5 bis 50 bar bis zu dem Bohrkopf 10 gepresst werden können.

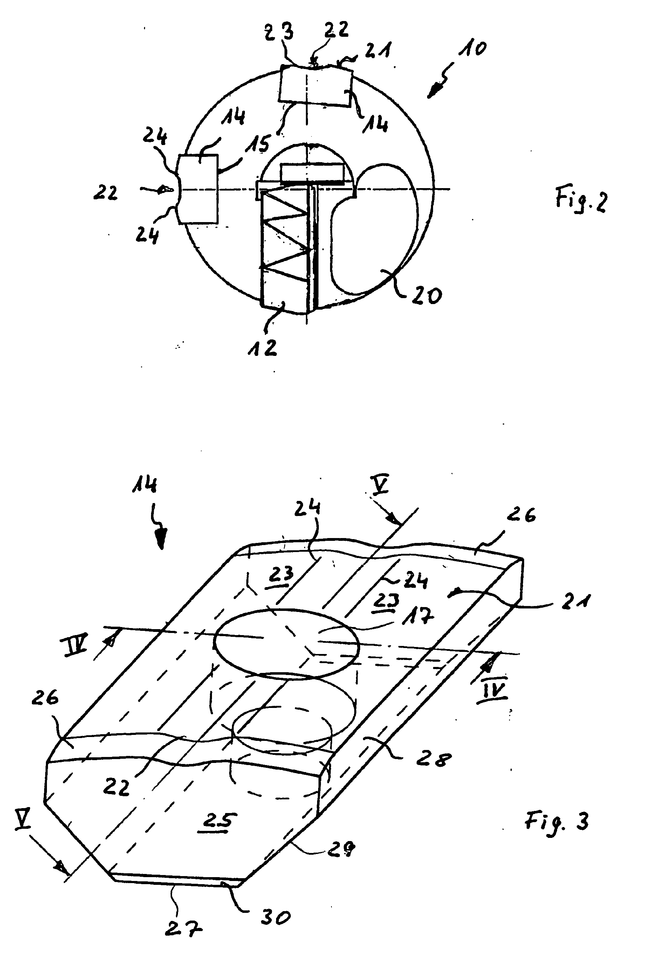

Die Kühlschmierstoffe, beispielsweise Bohröl oder der gleichen Emulsionen, führen die am Schneidwerkzeug 12 entstehende Wärme ab, schmieren sie und spülen die entstehenden Bohrspäne nach außen weg. Wie die Figur 2 zeigt, ist der Bohrkopf 10 dazu mit einem Spänemaul 20 versehen. Je nach Länge der bereits gefertigten Bohrung kann der Spüldruck variieren und entsprechend hoch eingestellt werden.

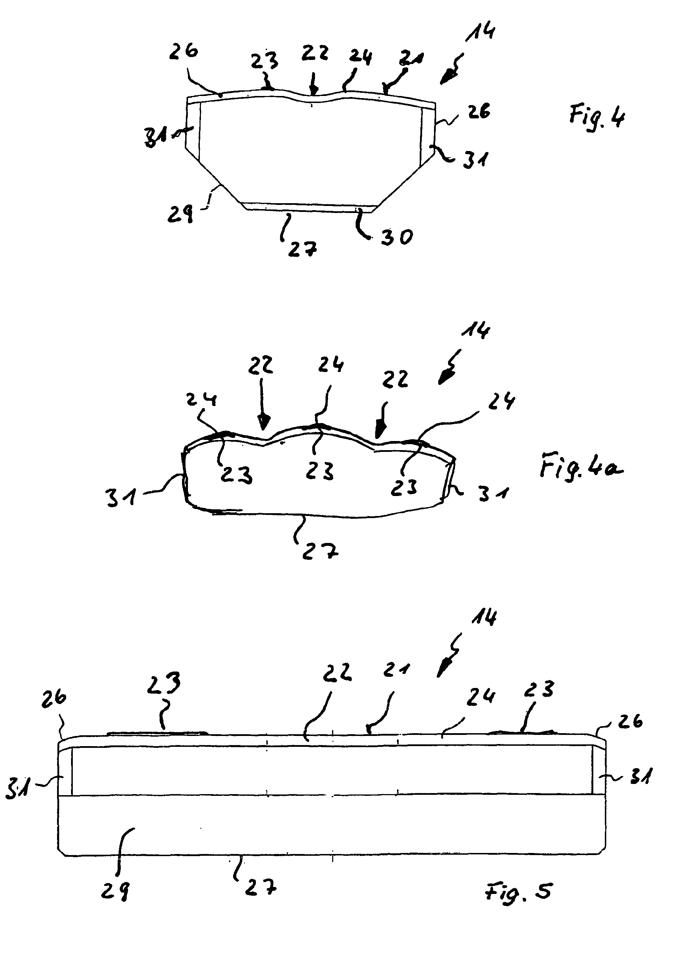

Wie die Figuren 3 und 4 zeigen, ist die Oberfläche 21 einer erfindungsgemäßen Führungsleiste 14 in Längsrichtung konvex gekrümmt. Im Scheitelpunkt der konvex gekrümmten Oberfläche 21 ist eine konkav ausgebildete Längsnut 22 vorgesehen. Dadurch wird die Oberfläche 21 in zwei etwa gleich große Verschleißbereiche 23 unterteilt, die je eine Radiengeometrie 24 ausbilden. Diese doppelten Radiengeometrien 24 gehen gleichmäßig angefast in die konkave Längsnut 22 über.

Bei einer anderen Ausführung der Erfindung, wie sie schematisch in der Figur 4a dargestellt ist, kann die Oberfläche 21 auch mit zwei oder mehr Längsnuten 22 versehen sein. Je nach Größe der aufzunehmenden Reaktionskräfte des Schneidwerkzeugs 12 kann die auftretende Flächenpressung damit auf eine Vielzahl von Radiengeometrien verteilt werden.

Die in der Figur 4 dargestellte Führungsleiste 14 ist an ihren beidendigen Kopfbereichen 25 mit oberen Anfasungen 26 versehen. Diese oberen Anfasungen 26 erleichtern die Einführung des Bohrkopfes 10 und stellen einen allmählichen Übergang zu den Verschleißbereichen 23 der Radiengeometrien 24 der Oberfläche 21 dar.

Zur Unterseite 27 hin sind die seitlichen Kantenbereiche 28 der Führungsleiste 14 erfindungsgemäß mit prismenförmigen Abschrägungen 29 versehen. Mit den prismenförmigen Abschrägungen 29 können die unterschiedlich hohen Flächenpressungen, die von dem Schneidwerkzeug 12 auf die Radiengeometrien 24 übertragen werden, gleichmäßiger auf die Führungsleistenlagerungen 15 des Bohrkopfes 10 übertragen werden; Verschleißspitzen werden dadurch vermieden.

Zu ihrer Unterseite 27 hin ist die Führungsleiste 14 an ihren beidendigen Kopfbereichen 25 mit unteren Anfasungen 30 versehen. Die unteren Anfasungen 30 sollen den Austausch und den Einbau der Führungsleisten 14 in die Führungsleistenlagerungen 15 des Bohrkopfes 10 erleichtern.

Wie die Figuren 4 und 5 zeigen, sind die seitlichen Kantenbereiche 28 beidendig mit angefasten seitlichen Anfasungen 31 versehen, die ebenfalls die Einführung des Bohrkopfes 10 erleichtern sollen.

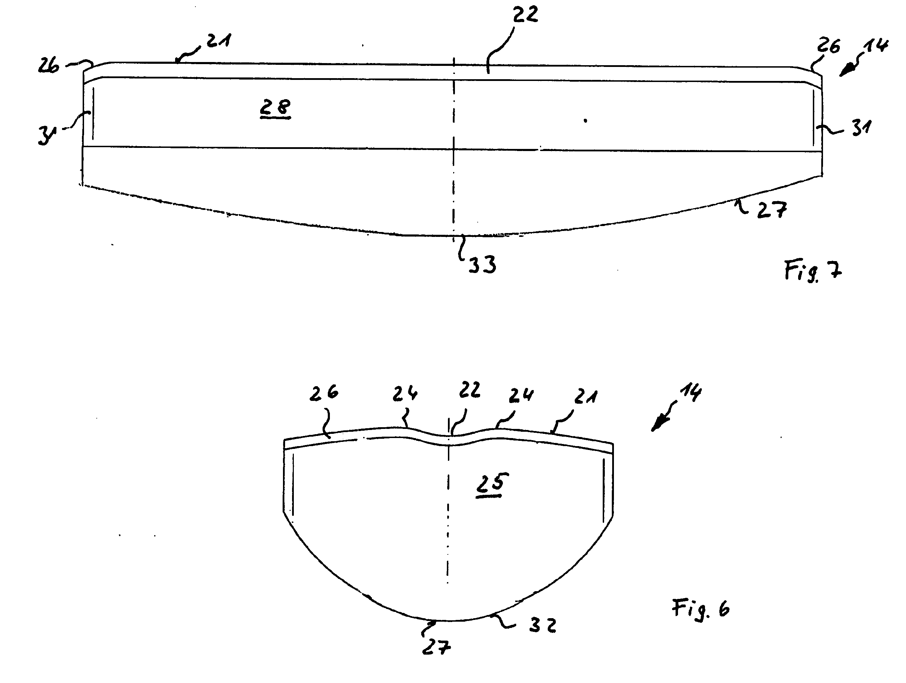

Bei der in der Figur 6 dargestellten Ausführung ist die Unterseite 27 der Führungsleiste 14 erfindungsgemäß mit einer Querabrundung 32 versehen. Mit dieser Querabrundung 32 ist die Führungsleiste 14 in einer entsprechend ausgebildeten Führungsleistenlagerung 15 des Bohrkopfes 10 quasi schwimmend gelagert. Unterschiedlich hohe Reaktionskräfte des Schneidwerkzeugs 12 können dadurch gleichmäßiger auf den Bohrkopf 10 übertragen werden.

Bei der in der Figur 7 dargestellten Ausführung ist die Unterseite 27 der Führungsleiste 14 erfindungsgemäß in ihrer Längsrichtung mit einer Längsabrundung 33 versehen. Auch mit dieser Längsabrundung 33 kann die Führungsleiste 14 in einer entsprechend ausgebildeten Führungsleistenlagerung 15 des Bohrkopfes 10 quasi schwimmend gelagert werden, so dass auch hier unterschiedlich hohe Reaktionskräfte des Schneidwerkzeugs 12 gleichmäßiger auf den Bohrkopf10 übertragen werden können.

### Bezugszeichen

- 10: Bohrkopf
- 11: Bohrgestänge
- 12: Schneidwerkzeug
- 13: Werkstück
- 14: Führungsleiste
- 15: Führungsleistenlagerung
- 16: Führungsleistenhalterung
- 17: Führungsleistenbohrung
- 18: Bohrungsoberfläche
- 19: Ringraum
- 20: Spänemaul
- 21: Oberfläche
- 22: Längsnut
- 23: Verschleißbereich
- 24: Radiengeometrie
- 25: beidendiger Kopfbereich
- 26: obere Anfasung
- 27: Unterseite
- 28: seitlicher Kantenbereich
- 29: Abschrägung
- 30: untere Anfasung
- 31: seitliche Anfasung
- 32: Querabrundung
- 33: Längsabrundung

## Patentansprüche

1. Führungsleiste (14) für einen mit einem Schneidwerkzeug versehenen, an einem Bohrgestänge (11) geführten Bohrkopf (10), mit dem tiefe Bohrlöcher in entsprechende Werkstücke einbringbar sind, die den Bohrkopf (10) unter Aufnahme der beim Bohren entstehenden Flächenpressung mit einer einen Verschleißbereich aufweisenden Oberfläche an der Bohrungsoberfläche des entstehenden Bohrloches abstützt, **dadurch gekennzeichnet, dass** die Oberfläche (21) der Führungsleiste (14) mit mindestens einer sich in Längsrichtung erstreckenden konkaven Längsnut (22) versehen ist und sich beiderseits der Längsnut (22) Verschleißbereiche (23) erstrecken.

2. Führungsleiste nach Anspruch 1, **dadurch gekennzeichnet, dass** die Oberfläche (21) der Führungsleiste (14) beiderseits der sich in Längsrichtung erstreckenden Längsnut (22) in Querrichtung eine doppelte Radiengeometrie (24) aufweist, wobei die doppelten Radiengeometrien (24) als Verschleißbereiche (23) ausgebildet sind.

3. Führungsleiste nach Anspruch 2, **dadurch gekennzeichnet, dass** die doppelten Radiengeometrien (24) gleichmäßig angefast in die konkave Längsnut (22) übergehen.

4. Führungsleiste nach Anspruch 1 und 2, **dadurch gekennzeichnet, dass** die Führungsleiste (14) an ihren beidendigen Kopfbereichen (25) mit Anfasungen (26) versehen ist, die einen allmählichen Übergang zu den Verschleißbereichen (23) der Radiengeometrien (24) der Oberfläche (21) darstellen.

5. Führungsleiste nach Anspruch 2, **dadurch gekennzeichnet, dass** die quer zu den doppelten Radiengeometrien (24) verlaufenen seitlichen Kantenbereiche (28) zwischen der Oberfläche (21) und der Unterseite (27) der Führungsleiste (14) mit prismenförmigen Abschrägungen (29) versehen sind, die in prismenförmig oder abgerundet ausgebildeten Führungsleistenlagerung (15) des Bohrkopfes (10) schwimmend gelagert sind.

6. Führungsleiste nach Anspruch 4, **dadurch gekennzeichnet, dass** die beidendigen Kopfbereiche (26) der Führungsleiste (14) mit oberen Anfasungen (26) und mit seitlichen Anfasungen (31) versehen sind.

7. Führungsleiste nach den Ansprüchen 1 bis 6, **dadurch gekennzeichnet, dass** sie aus einem Keramikmaterial, einem Hartmetall, einem Verbundwerkstoff, einem Sintermetall oder ähnlich geeigneten Werkstoff besteht.

8. Bohrkopf (10) der mit einem Schneidwerkzeug versehen und an einem Bohrgestänge (11) zum Bohren tiefer Bohrlöcher in entsprechende Werkstücke einbringbar ist, und dem zur Aufnahme der beim Bohren entstehenden Flächenpressung mindestens eine, an ihrer Oberfläche einen Verschleißbereich aufweisende Führungsleiste (14) zugeordnet ist, mit der er sich an der Bohrungsoberfläche des entstehenden Bohrloches abstützt, **dadurch gekennzeichnet, dass** zur Aufnahme der beim Bohren entstehenden Flächenpressung radial außen liegende Führungsleisten (14) verwendet werden, die mit in Längsrichtung von einander getrennten Verschleißbereichen (23) versehen sind wobei die Oberfläche der Führungsleisten (14) mit einer sich in Längsrichtung erstrechenden Konkaven Zänjsnut (22) versehen ist, und die Verschleiβbereiche (23) sich beiderseits der Zängsmut (22) erstrechen.

9. Bohrkopf nach Anspruch 8, **dadurch gekennzeichnet, dass** der Bohrkopf (10) prismenförmige Abschrägungen (29) zur Aufnahme von mindestens einer Führungsleiste (14) aufweist.

10. Bohrkopf nach Anspruch 8, **dadurch gekennzeichnet, dass** radial außen liegende Führungsleisten (14) gemäß den Ansprüchen 1 bis 7 verwendet werden.

## Claims

1. A guide rail (14) for a drill head (10) having a cutting tool attached thereto and guided along a drill pipe (11) and capable of sinking deep boreholes into corresponding work, said guide rail supporting drill head (10) against the borehole surface of the borehole so formed by way of a surface having a wear region while accommodating the surface pressure developed in the drilling process, **characterized in that** surface (21) of guide rail (14) has thereon at least one longitudinally extending concave groove (22) with wear regions (23) extend on both sides of longitudinal groove (22).

2. Guide rail as claimed in claim 1, **characterized in that** surface (21) of guide rail (14) has dual radius geometries (24) in the transverse direction on both sides of longitudinally extending groove (22), said dual radius geometries (24) formed to constitute wear regions (23).

3. Guide rail as claimed in claim 2, **characterized in that** dual radius geometries (24) merge with concave longitudinal groove (22) via uniformly chamfered surface portions.

4. Guide rail as claimed in claims 1 and 2, **characterized by** guide rail (14) has chamfered surface portions at both ends of its head areas (25) to constitute gradual transitions to wear regions (23) of radius geometries (24) of surface (21).

5. Guide rail as claimed in claim 2, **characterized in that** lateral edge portions (28) extending transversely of said dual radius geometries (24) between surface (21) and underside (27) of guide rail (14) have thereon prism-shaped chamfers (29) floatingly mounted in prismshaped or rounded-off guide rail mounts (15) of drill head (10).

6. Guide rail as claimed in claim 4, **characterized in that** head portions (26) at both ends of guide rail (14) have thereon top chamfers (26) and lateral chamfers (31).

7. Guide rail as claimed in claims 1 to 6, **characterized in** comprising a ceramic material, a hard metal, a composite material, a sintered metal or the like suitable material.

8. A drill head (10) provided with a cutting tool and disposed on a drill pipe (11) for drilling deep boreholes in corresponding work and having associated therewith for accommodating the surface pressure developed during drilling a guide rail (14) having a wear region on its surface, with the drill head supporting itself by said guide rail against the bore hole surface, **characterized by** using radially outwardly guide rails (14) for accommodating the surface pressure developed during drilling, said guide rails provided with longitudinally separated wear regions (23), with the surface of said guide rails (14) having therein a longitudinally extending concave groove (22) with wear regions (23) extending along both sides of longitudinal groove (22).

9. Drill head as claimed in claim 8, **characterized in that** drill head (10) has prism-shaped chamfers (29) for receiving at least one guide rail (14).

10. Drill head as claimed in claim 8, **characterized by** using radially outwardly disposed guide rails (14) as claimed in claims 1 to 7.

## Revendications

1. Baguette de guidage (14) pour une tête de forage (10) équipée d'un outil de coupe et guidée sur des tiges de forage (11) avec laquelle des trous profonds peuvent être introduits dans des pièces à usiner correspondantes, qui supporte la tête de forage (10), en recevant la pression superficielle surgissant lors du forage, avec une surface comprenant une zone d'usure, à la surface de forage du trou de forage étant réalisé, **caractérisé en ce que** la surface (21) de la baguette de guidage (14) est équipée d'au moins une rainure concave longitudinale (22) s'étendant en direction longitudinale, et que des zones d'usure (23) s'étendent de part et d'autre de la rainure longitudinale (22).

2. Baguette de guidage selon la revendication 1, **caractérisé en ce que** la surface (21) de la baguette de guidage (14) de part et d'autre de la rainure longitudinale (22) s'étendant en direction longitudinale comprend une géométrie radiale double (24) en direction transversale, les géométries radiales doubles (24) étant formées en tant que des zones d'usure (23).

3. Baguette de guidage selon la revendication 2, **caractérisé en ce que** les géométries radiales doubles (24) chanfreinées uniformément passent à la rainure concave longitudinale (22).

4. Baguette de guidage selon la revendication 1 et 2, **caractérisé en ce que** la baguette de guidage (14) est équipée de chanfreins (26) aux zones de tête (25) de deux extrémités qui présentent une transition graduelle aux zones d'usure (23) des géométries radiales (24) de la surface (21).

5. Baguette de guidage selon la revendication 2, **caractérisé en ce que** les zones latérales de bords (28) s'étendant transversalement aux géométries radiales doubles (24) entre la surface (21) et la face de dessous (27) de la baguette de guidage (14) sont équipées de biseaux en forme prismatique (29) qui sont montés libre dans le logement de baguette de guidage (15) en forme prismatique ou arrondi de la tête de forage (10).

6. Baguette de guidage selon la revendication 4, **caractérisé en ce que** les zones de tête (26) de deux extrémités de la baguette de guidage (14) sont équipées de chanfreins (26) supérieurs et des chanfreins (26) latéraux.

7. Baguette de guidage selon les revendications 1 à 6, **caractérisé en ce qu'**elle comprend un matériau céramique, un métal dur, un matériau composite, un métal fritté ou un matériau similaire approprié.

8. Tête de forage (10) qui est équipée d'un outil de coupe et sur des tiges de forage (11) pour forer des trous profonds peut être introduite dans des pièces à usiner correspondantes et à laquelle est attribuée, pour la réception de la pression superficielle surgissant lors du forage, au moins une baguette de guidage (14), équipée d'au moins une zone d'usure sur sa surface, avec laquelle elle s'appuie sur la surface de forage du trou de forage étant réalisé, **caractérisé en ce que**, pour la réception de la pression superficielle se produisant lors du forage, des baguettes de guidage (14) radiales extérieures sont utilisées qui sont équipées de zones d'usure (23) séparées l'une de l'autre en direction longitudinale, la surface des baguettes de guidage (14) étant équipée d'une rainure concave longitudinale (22) s'étendant en direction longitudinale, et les zones d'usure (23) s'étendant de part et d'autre de la rainure longitudinale (22).

9. Tête de forage (10) selon la revendication 8, **caractérisé en ce que** la tête de forage (10) comprend des biseaux en forme prismatique (29) pour recevoir au moins une baguette de guidage (14).

10. Tête de forage (10) selon la revendication 8, **caractérisé en ce que** des baguettes de guidage (14) radiales extérieures sont utilisées selon les revendications 1 à 7.
